# EUROPÄISCHE PATENTSCHRIFT

(11) **EP 1 690 902 B1**
(45) Veröffentlichungstag und Bekanntmachung des Hinweises auf die Patenterteilung: **15.08.2012**
(21) Anmeldenummer: 06002719.0
(22) Anmeldetag: 10.02.2006
(51) Int. Cl.: C09C 3/12, C09C 1/40, C09C 1/30

(54) **Oberflächenmodifizierte Nanopartikel, Verfahren zu ihrer Herstellung und ihrer Verwendung**
Surface-modified nanoparticles, method for making them and use
particules nanométriques à surfaces modifiées, procédé de fabrication et utilisation

(30) Priorität: 14.02.2005 DE 102005006870
(43) Veröffentlichungstag der Anmeldung: 16.08.2006
(73) Patentinhaber: BYK-Chemie GmbH, 46483 Wesel (DE)
(72) Erfinder: Nolte, Ulrich, Dr., 47533 Kleve (DE); Bubat, Alfred, 46487 Wesel (DE); Haubennestel, Karlheinz, 46487 Wesel (DE); Sawitowski, Thomas, Dr., 45133 Essen (DE)
(74) Vertreter: Leifert & Steffan

(56) Entgegenhaltungen:
- EP-A1- 0 473 812
- EP-A1- 0 686 676
- EP-A1- 0 687 657
- EP-A1- 1 304 361
- EP-A2- 0 175 092

## Beschreibung

Die vorliegende Erfindung betrifft oberflächenmodifizierte, aus Metall- oder Halbmetalloxiden oder -hydroxiden bestehende Nanopartikel, die auf ihrer Oberfläche mit einem Modifizierungsmittel unter Bildung von kovalenten Bindungen umgesetzt worden sind. Außerdem betrifft die vorliegende Erfindung neue Dispersionen der oberflächenmodifizierten Nanopartikel in Trägermedien. Weiterhin betrifft die vorliegende Erfindung ein Verfahren zur Herstellung der oberflächenmodizierten Nanopartikel. Ebenso betrifft die vorliegende Erfindung die Verwendung der neuen oberflächenmodifizierten Nanopartikel als Füllstoffe in Beschichtungsstoffen, Kunststoffen, Schaumstoffen und Nagellacken.

### Stand der Technik

Als Nanopartikel werden feinteilige Feststoffe mit einer Teilchengröße von 2 bis 200 nm bezeichnet. Die Bestimmung der Partikelgrößen erfolgte im Rahmen der vorliegenden Erfindung mittels Transmissionselektronenmikroskopie (TEM). Zur Bestimmung der Partikelgröße der erfindungsgemäßen Nanopartikel wurde eine TEM-Untersuchung durchgeführt. Die entsprechenden Nanopartikeldispersionen wurden verdünnt, auf ein Kohlenstoffgrid (600 Mesh Kohlenstoffilm) aufgetragen und getrocknet. Die Analyse erfolgte jeweils mit einem LEO 912-Transmissionselektronenmikroskop. Die Auswertung der TEM-Bilder wurde digital mit einer Software der Firma analySIS Soft Imaging System GmbH durchgeführt. Der Partikeldurchmesser wurde jeweils für mindestens 1000 Partikel errechnet, indem die gemessene Fläche der Nanopartikel mit einem flächengleichen Kreis korreliert wurde. Anschließend wurde der Mittelwert aus den Ergebnissen gebildet.
Der Einsatz von Nanopartikeln als Füllstoff für Beschichtungssysteme bietet den Vorteil, dass ein Beschichtungsmaterial gewünschte Eigenschaften (wie z.B. eine erhöhte Kratzfestigkeit) erhält ohne dass gleichzeitig negative Seiteneffekte in Kauf genommen werden müssen (wie z.B. mangelhafte Transparenz).

Es ist bekannt, dass der Einbau von Nanopartikeln in Beschichtungsstoffe zur Verbesserung der mechanischen Eigenschaften von Beschichtungssystemen und insbesondere von UV-härtbaren Beschichtungssystemen führt.
Beispielsweise wird in der Patentanmeldung EP 1236765 A1 ein Verfahren zur Modifizierung von nanoskaligen Silika-Partikeln mit Alkoxysilanen beschrieben, die nach Einbau in ein entsprechendes UV-härtbares Beschichtungssystem eine Verbesserung der mechanischen Eigenschaften bewirken. In anderen hochgradig vernetzten Systemen wie z.B. in Epoxidharzen werden ebenso positive Effekte gefunden. Die Verbesserung der mechanischen Eigenschaften ist im Wesentlichen auf die Bindung der Nanopartikel an die umgebende Matrix über chemische Bindungen zu erklären. Wegen der chemischen Anbindung der Partikel an die organische Matrix ist in Abhängigkeit vom Füllgrad der Beschichtungsmaterialien mit solchen Nanopartikeln eine zunehmende Versprödung zu beobachten, die je nach Applikationsgebiet der Beschichtung nicht zu tolerieren ist. Werden die bekannten nanoskaligen Füllstoffe auf Basis von Silika nicht an die organische Matrix angebunden, ist der Effekt der Verbesserung der mechanischen Eigenschaften in UV-härtbaren bzw. epoxy-basierten Beschichtungssystemen bei weitem nicht so ausgeprägt.
Neben Silika-Nanopartikeln lassen sich auch andere Nanopartikelsorten in Beschichtungsmaterialien einbauen, um mechanische Eigenschaften zu optimieren. Durch Zugabe von beispielsweise nanoskaligem Aluminiumoxid (z.B.: NANOBYK-3600 bzw. NANOBYK-3601; BYK-Chemie GmbH, Wesel) in UV-härtbare Beschichtungssysteme wird eine deutliche Verbesserung der Abriebfestigkeit ohne Einfluss auf die Flexibilität des Systems erreicht. Das Aluminiumoxid ist in diesem Fall nicht an die organische Matrix des Beschichtungssystems angebunden. Die Stabilisierung der Nanopartikel in der Lackmatrix erfolgt über handelsübliche Netz-und Dispergieradditive.

Beschichtungssysteme, die nicht strahlenhärtend sind oder auf Epoxidsystemen basieren, können ebenso durch Zugabe von Nanopartikeln in ihrer Kratzfestigkeit optimiert werden.
In der Patentschrift US 6593417 ist ein Verfahren beschrieben, nach dem Silika-Partikel in Kombination mit einem Polysiloxan in einem 2-Komponenten-Polyurethan-Lack eingesetzt werden. Das Polysiloxan verfügt über reaktive Gruppen, die mit der Lackmatrix über kovalente Gruppen anbinden kann. Die Anbindung des Polysiloxans an die Nanopartikel erfolgt lediglich über koordinative Wechselwirkungen. Die spezielle Kombination aus Nanopartikeln und Polysiloxan führt dazu, dass sich die Nanopartikel zur Grenzfläche Beschichtung-Luft orientieren und dort zu einer mechanischen Verstärkung, welche sich in erhöhter Kratzbeständigkeit äußert, führen. Nachteilig ist die Orientierung der Nanopartikel zur Grenzfläche Beschichtung/Luft, da durch Beanspruchung der Beschichtung durch Witterungs-und Gebrauchseinflüsse die oberste Schicht zuerst abgetragen wird und damit die Wirksamkeit im Laufe der Zeit nachlässt.
Die Patentschrift US 5853809 lehrt, dass eine Verbesserung der Kratzbeständigkeit von Beschichtungssystemen, wie sie z.B. in Automobildecklacken eingesetzt werden, durch den Einbau von modifizierten Nanopartikeln erfolgen kann. Die Modifikation der Nanopartikel erfolgt beispielsweise durch ein funktionelles Polyurethan in der Weise, dass das Polymer mit der Nanopartikel-Oberfläche eine kovalente Bindung eingeht. Weiterhin ist die polymere Hülle des so modifizierten Nanopartikels in der Lage mit dem Bindemittelsystem des Beschichtungsmaterials kovalente Bindungen einzugehen. Aussagen über die Versprödung des Lacksystems, insbesondere bei hohen Nanopartikelgehalten, werden nicht gemacht.

Diese bekannten modifizierten Nanopartikel verbessern zwar die Kratzfestigkeit der Lacke in denen sie eingesetzt werden, jedoch ist insbesondere bei nicht strahlenhärtenden Systemen, die Anbindung der Nanopartikel über die Modifizierung an die Lackmatrix bedenklich. Durch die Anbindung der Nanopartikel an die Lackmatrix wird die Netzwerkdichte des ausgehärteten Lackfilms erhöht, was zu einer erhöhten Sprödigkeit des Lackfilms führt.

Aus der Patentanmeldung DE 195 40 623 A1 sind nanoskalige Füllstoffteilchen bekannt, die in einer polymeren Matrix dispergiert werden. Als Oberflächenmodifikatoren werden unter anderem Silane, insbesondere Organoalkoxysilane, beschrieben. Der Oberflächenmodifikator ist eine niedrigmolekulare Verbindung mit einem Molekulargewicht, das nicht höher als 500 ist. Die funktionellen Gruppen, die solche Verbindungen tragen müssen, richten sich nach den Oberflächengruppen der nanoskaligen Teilchen und nach der gewünschten Wechselwirkung mit der Matrix. Die modifizierten Teilchen weisen also eine Affinität zur Matrix auf.

Aus der Patentanmeldung EP1304361 sind Kieselsäuren mit homogener Silylierungmittelschicht bekannt, die u.a. zur Verstärkung von Elastomeren verwendet werden können. Aus der Patentanmeldung EP0686676 ist ein Verfahren zur Herstellung von anorganischen Oxiden bekannt, wobei die erhaltenen Kieselsäuren als Verdickungsmittel, als Absorptionsmittel und als Additiv zur Verbesserung der Rieselfähigkeit von Tonern verwendet werden können.

### Aufgabe der Erfindung

Der vorliegenden Erfindung lag die Aufgabe zugrunde, eine neue Oberflächenmodifikation von Nanopartikeln bereitzustellen und die Nanopartikel als stabile Dispersion in Lösemitteln oder anderen Trägermedien, wie sie in der Lackindustrie eingesetzt werden, zur Verfügung zu stellen. Die neuen Dispersionen sollten auch bei hohem Partikelgehalt über eine hohe Lagerstabilität verfügen. Die Neigung der Nanopartikeldispersion zur Sedimentation bzw. zur Gelbildung sollte ausgeschlossen sein. Weiterhin sollte die Dispersion, wenn sie zur Herstellung von Beschichtungsmaterialien eingesetzt wird eine Erhöhung der Kratzfestigkeit der ausgehärteten Beschichtungen bewirken. Die Reaktivität der neuen oberflächenmodifizierten Nanopartikel gegenüber der Bindemittelkomponenten des eingesetzten Lacksystems sollte minimiert werden, um die Tendenz zur Versprödung des ausgehärteten Lackfilms zu vermeiden.
Eine weitere Aufgabe der Erfindung war, ein Verfahren bereitzustellen, das sich in einfacher Weise durchführen lässt und breit variiert werden kann, um somit neue oberflächenmodifizierte Nanopartikel und deren Dispersionen für unterschiedliche Anwendungszwecke maßgeschneidert zur Verfügung zu stellen.

### Lösung

Überraschenderweise wurde gefunden, daß die vorgenannten Aufgaben gelöst werden durch Nanopartikel, die auf ihrer Oberfläche kovalent gebundene Modifizierungsmittel tragen, die ein höheres Molekulargewicht aufweisen, vorzugsweise linear aufgebaut sind und gegenüber einer umgebenden Matrix inert sind.

Gegenstand der vorliegenden Erfindung sind daher oberflächenmodifizierte Nanopartikel der eingangs genannten Art, die dadurch gekennzeichnet sind, daß das Modifizierungsmittel ein Polysiloxan der folgenden allgemeinen Summenformel:

(R¹ₓ R²₃₋ₓ Si R³)_{y} R⁵

ist, in der bedeuten
x = 0-2, insbesondere 0
y = 1-10, bevorzugt 2-5
R¹ = einbindiger organischer Rest mit 1-18 C-Atomen, insbesondere 1-3 C-Atomen
R² = OH-Gruppe oder hydrolysierbare Gruppe bestehend aus:
   - linearer oder verzweigter oder cyclischer Alkoxygruppe mit 1-6 C-Atomen, insbesondere mit 1-2 C-Atomen
   - einem Halogenatom, insbesondere Chloratom oder
   - einem Carbonsäurerest mit 1-4 C-Atomen, bevorzugt 2 C-Atomen
R³ = zweibindiger organischer Rest bestehend aus:
   - bevorzugt linearem oder verzweigtem Alkylenrest mit 1-8 C-Atomen
   - Alkylenether
   - Alkylenthioether
   - Alkylenpolyether, bevorzugt auf Basis von Ethylenoxid, Propylenoxid oder Butylenoxid oder Mischungen der Oxide
   - Arylenpolyether
   - Alkylenpolyester oder
   - einer organischen aliphatischen oder aromatischen oder araliphatischen Gruppe, die neben Ester- bzw. Ethergruppen auch Urethan- bzw. Harnstoffgruppen enthält
R⁵ = mehrbindiger organischer Rest bestehend aus:
   - Polydialkylsiloxan mit einem zahlenmittlerem Molekulargewicht von 300-5000 Dalton, wobei die Alkylsubstituenten am Siliziumatom 1-8 C-Atome aufweisen.

Vorteilhafte Ausgestaltungen der Erfindung ergeben sich aus den Unteransprüchen und Nebenansprüchen.

Die beanspruchten Nanopartikel sind also Partikel, die aus einem Metall-, oder Halbmetalloxid bzw. -hydroxid bestehen, sowie Partikel, die aus gemischten Metallund/ oder Halbmetalloxiden bzw. -hydroxiden bestehen. Beispielsweise lassen sich die Oxide des Aluminiums, Siliziums, Zinks, Titans, usw. zur Herstellung modifizierter Nanopartikel heranziehen. Weiterhin lassen sich ebenso Oxidhydroxide wie beispielsweise Aluminiumoxidhydroxid nach dem angegebenen Verfahren modifizieren. Der Herstellprozess der oxidischen bzw. hydroxidischen bzw. oxidhydroxidischen Nanopartikel kann über die unterschiedlichsten Verfahren wie beispielsweise Ionenaustauschprozesse, Plasmaprozesse, Sol-Gel-Verfahren, Ausfällung, Zerkleinerung (z.B. durch Vermahlung) oder Flammhydrolyse usw. erfolgen. Die Größe der Nanopartikel liegt im Bereich von 2-200 nm, vorzugsweise unterhalb 100 nm, besonders bevorzugt unterhalb von 50 nm. Es ist unerheblich nach welchem Verfahren die oxidischen bzw. hydroxidischen Partikel hergestellt wurden.
Die gefundenen neuartigen Nanopartikel werden im Folgenden als "erfindungsgemäße Nanopartikel" bezeichnet. Die neuen Dispersionen der erfindungsgemäßen Nanopartikel werden im Folgenden als "erfindungsgemäße Dispersionen" bezeichnet.

### Die Vorteile der erfindungsgemäßen Lösung

In Kenntnis des Standes der Technik war es überraschend und für den Fachmann nicht vorhersehbar, dass die Aufgabe, die der vorliegenden Erfindung zugrunde liegt, durch die erfindungsgemäßen Nanopartikel, die erfindungsgemäßen Dispersionen und das erfindungsgemäße Herstellverfahren gelöst werden konnte.
Die Herstellung der erfindungsgemäßen Nanopartikel und der erfindungsgemäßen Dispersionen ließ sich in einfacher Weise durchführen ohne den Einsatz aufwändiger Methoden oder Verfahren.
Die erfindungsgemäßen Nanopartikel waren geeignet bei der Herstellung von thermisch härtbaren, strahlenhärtenden und 2-Komponenten Beschichtungssystemen, Thermoplasten, Schäumen, etc.
Durch die Bereitstellung der erfindungsgemäßen Dispersion ist es gelungen ein leicht handzuhabendes Nanopartikelkonzentrat zur Verfügung zu stellen, welches sich z.B. einfach in die unterschiedlichsten Lacksysteme zudosieren lässt, um den gewünschten Effekt einer verbesserten mechanischen Beständigkeit, z.B. Kratzbeständigkeit zu erzielen.
Neben der einfachen Dosierbarkeit der erfindungsgemäßen Dispersion war außerdem eine gute Stabilität der Dispersion gegen Absetzen und Gelbildung insbesondere bei hohen Feststoffgehalten festzustellen.

### Detaillierte Beschreibung der Erfindung

Die erfindungsgemäßen Nanopartikel sind mit modifizierenden Gruppen derart belegt, dass evtl. noch vorhandene funktionelle reaktive Gruppen auf der Partikeloberfläche soweit abgeschirmt sind, dass eine Reaktion dieser Gruppen mit anderen funktionellen Gruppen, aus sterischen Gründen nicht mehr stattfindet.

Die Oberfläche der erfindungsgemäßen Nanopartikel ist mit mindestens einer Sorte modifizierender Gruppen bedeckt. Der Aufbau der modifizierenden Gruppen ist im Folgenden dargestellt:

Die modifizierende Gruppe ist kovalent an die Partikeloberfläche angebunden. Die modifizierende Gruppe verfügt über 1-10 Strukturelemente, die mit der Partikeloberfläche mindestens jeweils eine kovalente Bindung aufbauen können. Weiterhin besteht die modifizierende Gruppe aus einem abstandshaltenden Teil, der keine Reaktionen mit der Partikeloberfläche eingehen kann und ebenso inert gegenüber der Matrix (anderen Lackbestandteilen, Kunststoffbestandteilen, etc.) ist. Der abstandshaltende Teil der modifizierenden Gruppe wird aus einem Polymer mit einem zahlenmittlerem Molekulargewicht im Bereich von 300-5000 Dalton gebildet. Dabei ist die Struktur des abstandshaltenden Restes vorzugsweise linear aufgebaut.

D.h. das Modifizierungsmittel ist aufgebaut aus mindestens einer oder mehreren gegenüber der Partikeloberfläche reaktiven Ankergruppen, sowie einem Polydialkylsiloxan. Die Ankergruppen mit den verbindenden Strukturen können an den Enden des Polydialkylsiloxans angebracht sein als auch als Seitengruppe am Polydialkylsiloxan vorliegen. Die folgende Darstellung veranschaulicht die möglichen Strukturen des Modifizierungsmittels:

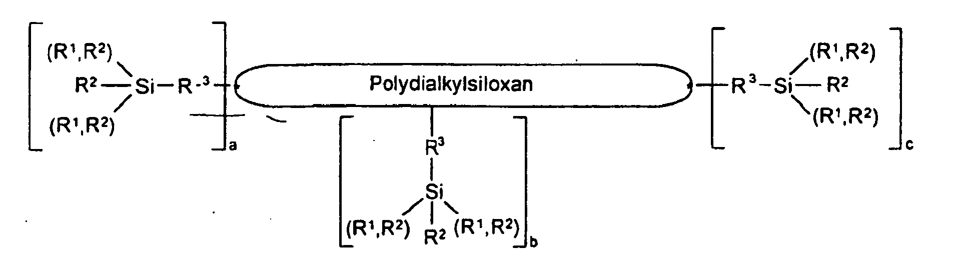

Die Indices haben folgende Bedeutung:
a=0-1
b=0-1
c=0-10
a+b+c ≥ 1

Die Struktur des Modifizierungsmittels einer bevorzugten Ausführungsform kann auch über obiges Schema beschrieben werden. Die Indices haben dann die Werte: a = 1 und b = c = 0. Diese Struktur des Modifizierungsmittels besitzt in der Anwendung die beste Wirksamkeit und ist damit bevorzugt. Es handelt sich hierbei um erfindungsgemäße Nanopartikel, die dadurch gekennzeichnet sind, daß das Modifizierungsmittel ein Polysiloxan der allgemeinen Summenformel

R¹ₓ R²₃₋ₓ Si-R³-R⁴

ist, in der R⁴ ein einbindiger organischer Rest bestehend aus einem Polydialkylsiloxan mit einem zahlenmittlerem Molekulargewicht von 300-5000 Dalton ist, wobei die Alkylsubstituenten am Siliziumatom 1-8 C-Atome aufweisen. Diese Ausführungen läßt sich folgendermaßen veranschaulichen:

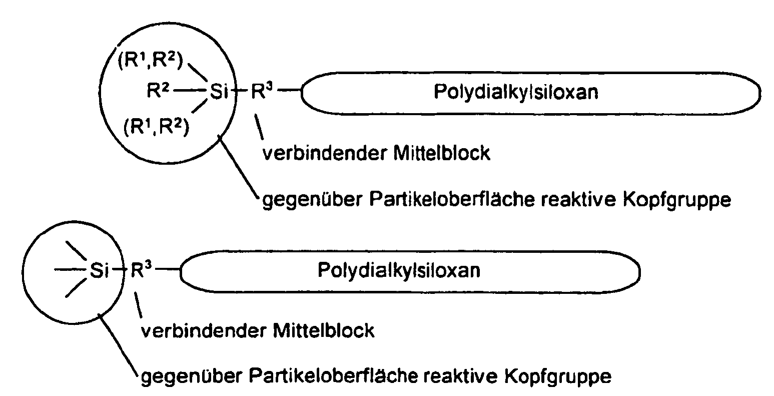

Besonders vorteilhaft ist der lineare molekulare Aufbau des Modifizierungsmittels. D.h. das Modifizierungsmittel ist aufgebaut aus einer gegenüber der Partikeloberfläche reaktiven Kopfgruppe, einem verbindenden Mittelblock (R³), sowie einem Polydialkylsiloxan (R⁴) als Endgruppe.

Auch bei dieser bevorzugten Ausführungsform ist die modifizierende Gruppe über mindestens eine, vorzugsweise zwei und besonders bevorzugt über drei kovalente Bindungen an die Partikeloberfläche angebunden. Weiterhin besteht die modifizierende Gruppe aus einem abstandshaltenden Teil, der keine Reaktionen mit der Partikeloberfläche eingehen kann und ebenso inert gegenüber der Matrix (andere Lackbestandteile, Kunststoffbestandteile, etc.) ist. Der abstandshaltende Teil der modifizierenden Gruppe wird aus einem Polymer mit einem zahlenmittleren Molekulargewicht im Bereich von 300-5000 Dalton gebildet. Dabei ist die Struktur des abstandshaltenden Restes vorzugsweise linear aufgebaut.

Zusätzlich zur Modifizierung der Partikel mit Gruppen wie vorstehend beschrieben, kann eine weitere Modifizierung mit Gruppen erfolgen, die über mindestens eine kovalente Bindung an die Partikeloberfläche angebunden sind, und über einen oder mehrere abstandshaltende Teile verfügen.
Beispielsweise können hier Alkylgruppen-tragende funktionelle Silane der allgemeinen Summenformel:

R⁷₍₄₋ₓ₎ Si R^{s}ₓ

eingesetzt werden, worin die Indices und Variablen folgende Bedeutung haben:
x = 1-3
R⁶ = einbindiger organischer Rest mit 1-18 C-Atomen, bevorzugt 1-6 C-Atomen, besonders bevorzugt 1-3 C-Atomen.
R⁷ = Hydroxylgruppe oder hydrolysierbare Gruppe bestehend aus:
   - linearer oder verzweigter oder cyclischer Alkoxygruppe mit 1-6 C-Atomen, insbesondere mit 1-2 C-Atomen
   - einem Halogenatom, insbesondere Chloratom oder
   - einem Carbonsäurerest mit 1-4 C-Atomen, bevorzugt 2 C-Atomen

Zusätzlich oder alternativ ist eine weitere Modifizierung der Partikeloberfläche mit Ether- und/oder Estergruppen möglich. Für diesen Zweck sind Silane der folgenden allgemeinen Summenformel einsetzbar:

R⁸₍₄₋ₓ₎ Si (R⁹-R¹⁰- R¹¹)ₓ

worin die Indices und Variablen folgende Bedeutung haben:
x = 1-3
R⁸ = Hydroxylgrupper oder hydrolysierbare Gruppe bestehend aus:
   - linearer oder verzweigter oder cyclischer Alkoxygruppe mit 1-6 C-Atomen, insbesondere mit 1-2 C-Atomen
   - einem Halogenatom, insbesondere Chloratom oder
   - einem Carbonsäurerest mit 1-4 C-Atomen, bevorzugt 2 C-Atomen
R⁹ = Sauerstoff oder zweibindige organische Gruppe, z. B. Alkylenrest
R¹⁰ = zweibindiger organischer Rest mit einer Molmasse im Bereich von 130-5000 Dalton bestehend aus einer
   - Polyethergruppe bestehend aus vorzugsweise
      - Ethylenoxid
      - Propylenoxid
      - Butylenoxid
      - Mischungen der Oxide
   - mindestens drei 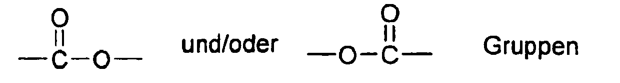 enthaltenden aliphatischen und/oder cycloaliphatischen und/oder aromatischen Polyestergruppe.
R¹¹ = -Alkyl
   - Acetoxy
   - O-R¹², wobei R¹² eine Alkylgruppe mit 1-18 C-Atomen ist
   - O-CO-NH-R¹³, wobei R¹³ eine Alkylgruppe mit 1-18 C-Atomen ist

Die Herstellung der erfindungsgemäßen Nanopartikel kann durch einfaches Vermischen des Modifizierungsmittels mit einem nanopartikulären Pulver erfolgen. Dabei ist sicherzustellen, dass eine kovalente Anbindung des Modifizierungsmittels an die Oberfläche der Nanopartikel stattfindet. Die Bedingungen hierfür richten sich nach der Reaktivität der miteinander umzusetzenden funktionellen Gruppen und können vom Fachmann leicht ermittelt werden. Wenn nicht bereits bei Raumtemperatur eine Reaktion stattfindet, kann beispielsweise durch Tempern der Mischung aus nanopartikulärem Pulver und Modifizierungsmittel bei einer Temperatur von ca. 80 °C über einen Zeitraum von ca. einer Stunde eine kovalente Anbindung des Modifizierungsmittels erreicht werden.
Die erfindungsgemäßen Nanopartikel können direkt in Lacken und Kunststoffen angewendet werden. Die erfindungsgemäßen Nanopartikel eignen sich jedoch besonders zur Herstellung von Dispersionen in z.B. Wasser, Lösemitteln, Weichmachern, Wachsen, Mineralölen und Reaktivverdünnern und anderen Trägermedien, wie sie üblicher Weise in der Lack- und Kunststoffindustrie eingesetzt werden.
Die Herstellung der erfindungsgemäßen Dispersionen erfolgt durch Einarbeitung entsprechend modifizierter Nanopartikel in das gewünschte Dispersionsmedium unter Anwendung von gebräuchlichen Dispergieraggregaten, wie zum Beispiel Zahnkolloidmühlen, Dissolvern, Ultraschalldispergatoren usw.

Durch Zugabe des Modifizierungsmittels in eine Nanopartikel-Dispersion wird eine erfindungsgemäße Dispersion erhalten. Bei diesem Verfahren ist ebenso sicherzustellen, dass eine kovalente Anbindung des Modifizierungsmittels an die Nanopartikeloberfläche stattfindet. Die Überführung einer erfindungsgemäßen Dispersion aus dem einen in ein anderes Dispersionsmedium gelingt beispielsweise durch eine Destillation. Durch Verwendung von geeigneten Schleppmitteln, die ein niedrigsiedendes Azeotrop mit dem zu entfernenden Dispergiermedium bilden, lassen sich solche Verfahren leicht optimieren.

Der Partikelgehalt der erfindungsgemäßen Dispersionen gemessen als Glührückstand kann dabei auf Werte von bis zu über 40% gesteigert werden, ohne dass es zur Gelbildung bzw. zu nennenswerter Sedimentierung kommt.

Die erfindungsgemäßen Dispersionen können dabei mindestens einen zusätzlichen Stoff enthalten, der aus dem Bereich der lacktypischen Additive, Bindemittel oder Vernetzungsmittel stammt. Beispielsweise sind hier Netz- und Dispergieradditive bzw. Additive zur Steuerung der rheologischen Eigenschaften aber auch Entschäumer, Lichtschutzmittel und Katalysatoren zu nennen.

Die erfindungsgemäßen Nanopartikel und die erfindungsgemäßen Dispersionen sind ausgesprochen breit anwendbar. Die breite Anwendbarkeit in Kombination mit der außerordentlich guten Wirksamkeit der erfindungsgemäßen Nanopartikel und der erfindungsgemäßen Dispersionen übertreffen die Nanopartikel des Standes der Technik bei weitem.

Die Anwendung der erfindungsgemäßen Nanopartikel und Dispersionen erfolgt durch Zugabe in bestehende Systeme, die zu Lacken, Klebstoffen, Kunststoffen, etc weiterverarbeitet werden. Durch die Zugabe bereits kleiner Mengen der erfindungsgemäßen Nanopartikel bzw. erfindungsgemäßen Dispersionen wird eine außerordentlich erhöhte mechanische Beständigkeit bei gleichzeitig erhöhter Beständigkeit gegen chemische Einflüsse der letztendlich resultierenden Beschichtung bzw. des Formteils erzielt.
Überraschenderweise werden die Verarbeitungseigenschaften der Lacke und Kunststoffe nur unwesentlich beeinflusst, sodass keine neue Optimierung der äußeren Parameter bei diesen Anwendungen erfolgen muss.
Die erfindungsgemäßen Nanopartikel und ihre Dispersionen eignen sich hervorragend für den Einsatz in Beschichtungsmaterialien, Kunststoffen, Klebstoffen, Dichtungsmassen, etc.

### 7 Beispiele

### 7.1 Herstellbeispiele

### 7.1.1 Herstellbeispiel 1

In einem 250-ml-Vierhalskolben mit Heizung, Innenthermometer, Rührwerk, Rückflusskühler und Schutzgasanschluss werden 100 g Si-H-funktionelles Polysiloxan mit folgender durchschnittlicher Struktur vorgelegt:

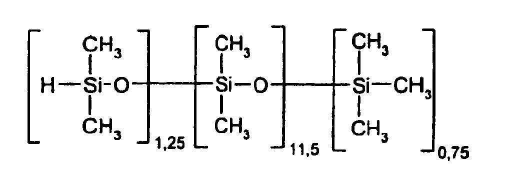

Dieses Silikon lässt sich einfach durch eine Äquilibrierungsreaktion, wie bei Noll (Chemie und Technologie der Silicone, Wiley/VCH, Weinheim, 1984) beschrieben, darstellen.
Das Silikon wird unter Stickstoff auf 70 °C erhitzt und mit 16,3 g Vinyltrimethoxysilan (z.B.: Geniosil XL10; Wacker Chemie GmbH) versetzt. Anschließend werden 10 ppm Hexachloroplatinsäure zugegeben. Nach Abklang der exothermen Reaktion wird das Reaktionsgemisch eine Stunde bei 80 °C gerührt. Anschließend wird Vakuum angelegt und ca. 2 g nicht umgesetztes Vinyltrimethoxysilan bzw. leicht flüchtige Bestandteile des Polysiloxans destillativ abgetrennt. Das Produkt ist niedrigviskos und besitzt eine leicht bernsteinartige Färbung.

### 7.1.2 Herstellbeispiel 2

In einen Küchenmixer (Braun, Typ MX32) werden 100 g nanoskaliges Aluminiumoxid vorgelegt (NanoDur, Nanophase Technology Corporation) und mit 4 g Modifizierungreagenz aus Herstellbeispiel 1 versetzt. Anschließend wird die Mischung 1 Minute lang homogenisiert. Das mit Modifizierungsreagenz belegte Pulver wird eine Stunde lang bei 80 °C getempert. Die modifizierten Nanopartikel liegen als fließfähiges Pulver vor, es liegen keinerlei Verklumpungen vor.

### 7.1.3 Herstellbeispiel 3

In eine Lösung aus 56,8 g Methoxypropylacetat und 3,2 g Netz- und Dispergierhilfsmittel (BYK-9077, BYK-Chemie GmbH) werden 40 g der modifizierten Nanopartikel aus Herstellbeispiel 2 eingerührt und anschließend mit Ultraschall (Dr. Hielscher, UIP 1000, 500 W, 4 min) dispergiert. Die so erhaltene Dispersion ist niedrigviskos und zeigt keinerlei Tendenz zur Gelbildung bzw. Sedimentation nach 28 Tagen Lagerung.

### 7.1.4 Herstellbeispiel 4

In einem 250-ml-Vierhalskolben werden 75 g wässriges Kieselsol (Köstrosol 2040AS, Chemiewerk Bad Köstritz) vorgelegt und mit 75 g 1-Methoxy-2-propanol vermischt und auf 60 °C erwärmt. In die Mischung werden 1,6 g Propyltrimethoxysilan (Dynasylan PTMO, Degussa AG) zugetropft und zwei Stunden bei 60 °C gerührt. Anschließend werden 80 g Methoxypropylacetat zugegeben und 110 g Lösemittelgemisch im Vakuum bei 70 °C abgetrennt. Im Anschluss daran werden 1,25 g Modifizierungsreagenz aus Herstellbeispiel 1 zugegeben und es wird zwei Stunden bei 75 °C gerührt. Nach der Zugabe von 3,75 g Netz- und Dispergierhilfsmittel (Disperbyk-168, BYK-Chemie GmbH) wird die Dispersion homogenisiert und anschließend durch Abtrennung von Lösemittelgemisch im Vakuum bei 75 °C ein Festkörper von 35 % eingestellt. Die erhaltene Dispersion zeigt eine für kolloidale Mischungen typische Transluzenz, ist niedrigviskos und zeigt keinerlei Tendenzen zur Gelbildung oder Sedimentation nach 28 Tagen Lagerung.

### 7.1.5 Herstellbeispiel 5 (Vergleichsbeispiel)

In eine Lösung aus 56,8 g Methoxypropylacetat und 3,2 g Netz- und Dispergierhilfsmittel (BYK-9077, BYK-Chemie GmbH) werden 40 g nanoskaliges Aluminiumoxid-Pulver (NanoDur, Nanophase Technology Corporation) eingerührt und anschließend mit Ultraschall (Dr. Hielscher, UIP 1000, 500 W, 4 min) dispergiert. Die so erhaltene Dispersion ist niedrigviskos und zeigt keinerlei Tendenz zur Gelbildung bzw. Sedimentation nach 28 Tagen Lagerung.

### 7.1.6 Herstellbeispiel 6 (Vergleichsbeispiel)

In einem 250-ml-Vierhalskolben werden 75 g wässriges Kieselsol (Köstrosol 2040AS, Chemiewerk Bad Köstritz) vorgelegt und mit 75 g 1-Methoxy-2-propanol vermischt und auf 60 °C erwärmt. In die Mischung werden 1,6 g Propyltrimethoxysilan (Dynasylan PTMO, Degussa AG) zugetropft und es wird zwei Stunden bei 60 °C gerührt. Anschließend werden 80 g Methoxypropylacetat zugegeben und 110 g Lösemittelgemisch im Vakuum bei 70 °C abgetrennt. Nach der Zugabe von 3,75 g Netz- und Dispergierhilfsmittel (Disperbyk-168, BYK-Chemie GmbH) wird die Dispersion homogenisiert und anschließend durch Abtrennung von Lösemittelgemisch im Vakuum bei 75 °C ein Festkörper von 35 % eingestellt. Die erhaltene Dispersion zeigt eine für kolloidale Mischungen typische Transluzenz, ist niedrigviskos und zeigt keinerlei Tendenzen zur Gelbildung nach 28 Tagen Lagerung.

### 7.1.7 Herstellbeispiel 7

In einem 250-ml-Vierhalskolben mit Rührer, Innenthermometer, Kühler und Schutzgaseinlass werden 53,3 g Silaplane FM 0411 (Chisso Corporation) vorgelegt und mit 26,6 g Caprolacton vermischt. Die Mischung wird unter Stickstoff als Schutzgas auf 100 °C erwärmt. Bei dieser Temperatur werden 0,004 g Dibutyl-Zinn-Dilaurat zugegeben und es wird weiter bis auf 180°C erwärmt. Nach vier Stunden bei dieser Temperatur wird die Reaktionsmischung auf 70 °C abgekühlt und mit 9,9 g 3-Isocyanatopropyltrimethoxysilan (SLM GENIOSIL GF 40, Wacker) vermischt. Nach zwei Stunden Reaktionszeit wird das Produkt abgekühlt. Es resultiert eine wachsartige, leicht gelbliche Substanz.

### 7.1.8 Herstellbeispiel 8/9

In einem 250-ml-Vierhalskolben werden 75 g wässriges Kieselsol (Köstrosol 2040AS, Chemiewerk Bad Köstritz) vorgelegt und mit 75 g 1-Methoxy-2-propanol vermischt und auf 60 °C erwärmt. In die Mischung werden 1,6 g Propyltrimethoxysilan (Dynasylan PTMO, Degussa AG) zugetropft und es wird zwei Stunden bei 60 °C gerührt. Anschließend werden 80 g Methoxypropylacetat zugegeben und 110 g Lösemittelgemisch im Vakuum bei 70 °C abgetrennt. Im Anschluss daran werden 1,20 g (Herstellbeispiel 8) bzw. 2,40 g (Herstellbeispiel 9) Modifizierungsreagenz aus Herstellbeispiel 7 zugegeben und es wird zwei Stunden bei 75 °C gerührt. Nach der Zugabe von 3,75 g Netz- und Dispergierhilfsmittel (Disperbyk-168, BYK-Chemie GmbH) wird die Dispersion homogenisiert und anschließend durch Abtrennung von Lösemittelgemisch im Vakuum bei 75 °C ein Festkörper von 35 % eingestellt. Die erhaltene Dispersion zeigt eine für kolloidale Mischungen typische Transluzenz, ist niedrigviskos und zeigt keinerlei Tendenzen zur Gelbildung oder Sedimentation nach 28 Tagen Lagerung.

### 7.1.9 Herstellbeispiel 10

In einem 100-ml-Vierhalskolben mit Rührer, Innenthermometer, Kühler und Schutzgaseinlass werden 40,0 g Silaplane FM 0411 (Chisso Corporation) vorgelegt und mit 40,0 g Caprolacton vermischt. Die Mischung wird unter Stickstoff als Schutzgas auf 70 °C erwärmt. Bei dieser Temperatur werden 0,004 g Dibutyl-Zinn-Dilaurat zugegeben. Es wird anschließend auf 180 °C erwärmt. Nach vier Stunden Reaktionszeit wird auf 70 °C abgekühlt und anschließend werden 9,3 g 3-Isocyanatopropyltrimethoxysilan (SLM GENIOSIL GF 40 Wacker) zugetropft. Nach zwei Stunden Reaktionszeit wird das Produkt auf Raumtemperatur abgekühlt. Es resultiert eine wachsartige, leicht gelbliche Substanz.

### 7.1.10 Herstellbeispiel 11/12

In einem 250-ml-Vierhalskolben werden 75 g wässriges Kieselsol (Köstrosol 2040AS, Chemiewerk Bad Köstritz) vorgelegt und mit 75 g 1-Methoxy-2-propanol vermischt und auf 60 °C erwärmt. In die Mischung werden 1,6 g Propyltrimethoxysilan (Dynasylan PTMO, Degussa AG) zugetropft und es wird zwei Stunden bei 60 °C gerührt. Anschließend werden 80 g Methoxypropylacetat zugegeben und 110 g Lösemittelgemisch im Vakuum bei 70 °C abgetrennt. Im Anschluss daran werden 1,20 g (Herstellbeispiel 11) bzw. 2,40 g (Herstellbeispiel 12) Modifizierungsreagenz aus Herstellbeispiel 10 zugegeben und es wird zwei Stunden bei 75 °C gerührt. Nach der Zugabe von 3,75 g Netz- und Dispergierhilfsmittel (Disperbyk-168, BYK-Chemie GmbH) wird die Dispersion homogenisiert und anschließend durch Abtrennung von Lösemittelgemisch im Vakuum bei 75 °C ein Festkörper von 35 % eingestellt. Die erhaltene Dispersion zeigt eine für kolloidale Mischungen typische Transluzenz, ist niedrigviskos und zeigt keinerlei Tendenzen zur Gelbildung oder Sedimentation nach 28 Tagen Lagerung.

### 7.1.11 Herstellbeispiel 13

In einem 250-ml-Vierhalskolben werden 75 g wässriges Kieselsol (Köstrosol 2040AS, Chemiewerk Bad Köstritz) vorgelegt und mit 100 g Diacetonalkohol vermischt und auf 70 °C erwärmt. In die Mischung werden 2,25 g eines polyethermodifizierten Alkoxysilans (Silquest A-1230, OSi Specialities) zugetropft und es wird zwei Stunden bei 70 °C gerührt. Anschließend werden 30 g Lösemittelgemisch im Vakuum bei 70 °C abgetrennt. Im Anschluss daran werden 1,25 g Moidifizierungsreagenz aus Herstellbeispiel 1 zugegeben und es wird zwei Stunden bei 70 °C gerührt. Nach der Zugabe von 6,0 g Netz- und Dispergierhilfsmittel (Disperbyk-191, BYK-Chemie GmbH) wird die Dispersion durch Abtrennung von Lösemittelgemisch im Vakuum bei 75 °C ein Festkörpergehalt von 35 % (Glührückstand) eingestellt. Die erhaltene Dispersion zeigt eine für kolloidale Mischungen typische Transluzenz, ist niedrigviskos und zeigt keinerlei Tendenzen zur Gelbildung oder Sedimentation nach 28 Tagen Lagerung.

### 7.2 Anwendungsbeispiele

Die folgenden Anwendungsbeispiele erläutern die Wirksamkeit der erfindungsgemäßen Nanopartikel und ihrer Dispersionen im Vergleich zu den entsprechenden nicht-erfindungsgemäßen Nanopartikeln. Alle Angaben beziehen sich auf Gewichtsteile

### 7.2.1 Anwendungsbeispiele 1-5

2-Komponenten Holzlacksystem

| Komponente | Anwendungsbeispiel 1 | Anwendungsbeispiel 2 | Anwendungsbeispiel 3 | Anwendungsbeispiel 4 | Anwendungsbeispiel 5 |
|---|---|---|---|---|---|
| Desmophen 1300 BA | 33,75 | 33,75 | 33,75 | 33,75 | 33,75 |
| Methoxypropylacetat | 41,25 | 37,50 | 37,50 | 30,54 | 30,54 |
| Dispersion aus Herstellbeispiel 3 | ---- | 3,75 | ---- | ---- | ---- |
| Dispersion aus Herstellbeispiel 5 (Vergleich) | ---- | ---- | 3,75 | ---- | ---- |
| Dispersion aus Herstellbeispiel 4 | ---- | ---- | ---- | 10,71 | ---- |
| Dispersion aus Herstellbeispiel 6 (Vergleich) | ---- | ---- | ---- | ---- | 10,71 |
| Desmodur HL 60 BA | 25,00 | 25,00 | 25,00 | 25,00 | 25,00 |

| | | | | | |
|---|---|---|---|---|---|
| Desmophen 1300 BA (Polyesterpolyol) Bayer AG | | | | | |
| Desmodur HL 60 BA (Polyisocyanat auf Basis Toluylendiisocyanat/ Hexamethylendiisocyanat) Bayer AG | | | | | |

Die Komponenten Desmophen 1300 BA, Methoxypropylacetat und gegebenenfalls die entsprechende Dispersion wurden intensiv vermischt. Anschließend wurde der Härter Desmodur HL 60 BA zugegeben und verrührt. Das resultierende Beschichtungsmaterial wurde auf PMMA-Platten (200 x 400 mm²) bzw. Glasplatten (100^{*}200 mm) mit einem 100 µm Spiralrakel aufgetragen. Die Aushärtung der Beschichtung erfolgte bei 40 °C für eine Stunde. Nach der forcierten Trocknung wurden die Substrate für drei Tage bei Raumtemperatur gelagert und anschließend getestet. Die resultierende Schichtdicke betrug ca. 40 µm.

Die Messung des Streulichtanteils der Beschichtungen wurde in Transmission mit einem Gerät der Firma BYK-Gardner (haze-gard plus) gemessen. Die Kratzbeständigkeit wurde mit einem Scheuergerät (Wet Abrasion Scrub Tester, BYK-Gardner) in Anlehnung an die Methode ASTM D 2486 getestet. Die Messung des Glanzes der Beschichtungen erfolgte jeweils vor und nach Durchführung des vorgenannten Verkratzungstests mit einem Glanzmessgerät (Micro-tri-gloss, BYK-Gardner).

| Beispiel | Streulichtverlust / %Haze | Glanz (20°) vor Verkratzungstest / Glanzeinheiten | Glanz (20°) nach Verkratzungstest/ Glanzeinheiten | Glanzverlust (20°) nach Verkratzungstest |
|---|---|---|---|---|
| Anwendungsbeispiel 1 (Nullprobe) | 0,28 | 96 | 55 | 41 |
| Anwendungsbeispiel 2 (erfindungsgemäße Nanopartikel) | 1,81 | 101 | 99 | 2 |
| Anwendungsbeispiel 3 (Vergleichsprobe) | 2,22 | 96 | 72 | 24 |
| Anwendungsbeispiel 4 (erfindungsgemäße Nanopartikel) | nicht bestimmt | 91 | 90 | 1 |
| Anwendungsbeispiel 5 (Vergleichsprobe) | nicht bestimmt | 92 | 77 | 15 |

### 7.2.2 Anwendungsbeispiele 6-8

2-Komponenten Auto-Reparatursystem

| Komponente 1 | Anwendungsbeispiel 6 | Anwendungsbeispiel 7 | Anwendungsbeispiel 8 |
|---|---|---|---|
| Macrynal SM515/70BAC | 46,7 | 46,7 | 46,7 |
| Methoxypropylacetat | 8,3 | 8,3 | 8,3 |
| Butylglykolacetat | 1,3 | 1,3 | 1,3 |
| TinStab BL277 (1%ige Lösung in Butylacetat) | 0,2 | 0,2 | 0,2 |
| Butylacetat | 10,1 | 10,1 | 10,1 |
| Dispersion aus Herstellbeispiel 4 | ---- | 3,3 | ---- |
| Dispersion aus Herstellbeispiel 6 (Vergleich) | ---- | ---- | 3,3 |

| Komponente 2 | Anwendungsbeispiel 6 | Anwendungsbeispiel 7 | Anwendungsbeispiel 8 |
|---|---|---|---|
| Desmodur N 3390 | 26,5 | 26,5 | 26,5 |
| Butylacetat | 6,9 | 6,9 | 6,9 |

| | |
|---|---|
| Macrynal SM 515/70BAC (Hydroxyfunktionelles Polyacrylat) | UCB |
| TinStab BL277 (Dibutylzinndilaurat) | Akcros Chemicals |
| Desmodur N 3390 (aliphatisches Polyisocyanat) | Bayer AG |

Die Bestandteile der jeweiligen Komponenten wurden wurden intensiv vermischt. Direkt vor der Beschichtung wurden die beiden Komponenten 1 und 2 gemischt. Die Applikation des Beschichtungssystems erfolgte durch eine Spritzapplikation auf PMMA-Platten (200 x 400 mm²). Nach einer Ablüftzeit von einer Stunde bei Raumtemperatur wurde eine forcierte Trocknung bei 60 °C über einen Zeitraum von 12 Stunden durchgeführt. Die erzielte Schichtdicke der Beschichtung betrug ca. 45 µm. Die Kratzbeständigkeit wurde mit einem Scheuergerät (Wet Abrasion Scrub Tester, BYK-Gardner) in Anlehnung an die Methode ASTM D 2486 getestet. Die Beurteilung der gebildeten Verkratzung wurde visuell auf einer Skala von 1 (keine Verkratzung) bis 6 (sehr starke Verkratzung) vorgenommen. Die Beurteilung des Glanzes und des Schleiers (Haze) wurde ebenso visuell durchgeführt und die Ergebnisse einem Wert von 1-6 zugeordnet (1 =sehr gut, 6=sehr mangelhaft).

| Beispiel | Verkratzungsgrad | Glanz, Schleier (Haze) |
|---|---|---|
| Anwendungsbeispiel 6 (Nullprobe) | 6 | 1 |
| Anwendungsbeispiel 7 (erfindungsgemäße Nanopartikel) | 1 | 1 |
| Anwendungsbeispiel 8 (Vergleich) | 5 | 1-2 |

### 7.2.3 Anwendungsbeispiele 9-11

UV-Beschichtungssystem

| Komponente | Anwendungsbeispiel 9 | Anwendungsbeispiel 10 | Anwendungsbeispiel 11 |
|---|---|---|---|
| Roskydal UA VP LS 2308 | 60,0 | 60,0 | 60,0 |
| Hexandioldiacrylat | 35,0 | 35,0 | 35,0 |
| Darocur 1173 | 5,0 | 5,0 | 5,0 |
| Dispersion aus Herstellbeispiel 4 | ---- | 5,9 | ---- |
| Dispersion aus Herstellbeispiel 6 (Vergleich) | ---- | ---- | 5,9 |

| | | | |
|---|---|---|---|
| Roskydal UA VP LS 2308 (aliphatisches Urethanacrylat) Bayer AG | | | |
| Darocur 1173 (2-Hydroxy-2-methyl-1-phenyl-1-propanon) Ciba Specialty Chemicals | | | |

Die Komponenten der einzelnen Beschichtungssysteme wurden intensiv gemischt und 16 Stunden an einem dunklen Ort bei Raumtemperatur gelagert. Die Lacke wurden mit einem 25 µm Spiralrakel auf Plexiglasplatten aufgetragen und anschließend 15 Minuten abgelüftet. Die Aushärtung der Beschichtungen erfolgte an einer UV-Anlage. Insgesamt wurden die Beschichtungen zweimal bei einer Bandgeschwindigkeit von 5,0 m/min mit einer Bestrahlungsintensität von 120 W/cm behandelt.
Die Kratzbeständigkeit wurde mit einem Scheuergerät (Wet Abrasion Scrub Tester, BYK-Gardner) in Anlehnung an die Methode ASTM D 2486 getestet. Die Beurteilung der gebildeten Verkratzung wurde visuell auf einer Skala von 1 (keine Verkratzung) bis 6 (sehr starke Verkratzung) vorgenommen.

| Beispiel | Verkratzungsgrad |
|---|---|
| Anwendungsbeispiel 9 (Nullprobe) | 5 |
| Anwendungsbeispiel 10 (erfindungsgemäße Nanopartikel) | 2 |
| Anwendungsbeispiel 11 (Vergleich) | 4 |

### 7.2.4 Anwendungsbeispiel12-15

2-Komponenten Auto-Reparatursystem

| Komponente 1 | Anwendungsbeispiel 6 | Anwendungsbeispiel 12 | Anwendungsbeispiel 13 | Anwendungsbeispiel 14 | Anwendungsbeispiel 15 |
|---|---|---|---|---|---|
| Macrynal SM515/70BAC | 46,7 | 46,7 | 46,7 | 46,7 | 46,7 |
| Methoxypropylacetat | 8,3 | 8,3 | 8,3 | 8,3 | 8,3 |
| Butylglykolacetat | 1,3 | 1,3 | 1,3 | 1,3 | 1,3 |
| TinStab BL277 (1%ige Lösung in Butylacetat) | 0,2 | 0,2 | 0,2 | 0,2 | 0,2 |
| Butylacetat | 10,1 | 10,1 | 10,1 | 10,1 | 10,1 |
| Dispersion aus Herstellbeispiel 8 | ---- | 3,3 | ---- | ---- | ---- |
| Dispersion aus Herstellbeispiel 9 | ---- | ---- | 3,3 | ---- | ---- |
| Dispersion aus Herstellbeispiel 11 | ---- | ---- | ---- | 3,3 | ---- |
| Dispersion aus Herstellbeispiel 12 | ---- | ---- | ---- | ---- | 3,3 |

| Komponente 2 | Anwendungsbeispiel 6 | Anwendungsbeispiel12 | Anwendungsbeispiel 13 | Anwendungsbeispiel14 | Anwendungsbeispiel15 |
|---|---|---|---|---|---|
| Desmodur N 3390 | 26,5 | 26,5 | 26,5 | 26,5 | 26,5 |
| Butylacetat | 6,9 | 6,9 | 6,9 | 6,9 | 6,9 |

| | |
|---|---|
| Macrynal SM 515/70BAC (Hydroxyfunktionelles Polyacrylat) | UCB |
| TinStab BL277 (Dibutylzinndilaurat) | Akcros Chemicals |
| Desmodur N 3390 (aliphatisches Polyisocyanat) | Bayer AG |

Die Bestandteile der jeweiligen Komponenten wurden intensiv vermischt. Direkt vor der Beschichtung wurden die Komponenten 1 und 2 gemischt. Die Applikation des Beschichtungssystems erfolgte durch eine Spritzapplikation auf PMMA-Platten (200*400 mm). Nach einer Ablüftzeit von einer Stunde bei Raumtemperatur wurde eine forcierte Trocknung bei 60 °C über einen Zeitraum von 12 Stunden durchgeführt. Die erzielte Schichtdicke der Beschichtung betrug ca. 45 µm.
Die Kratzbeständigkeit wurde mit einem Scheuergerät (Wet Abrasion Scrub Tester, BYK-Gardner) in Anlehnung an die Methode ASTM D 2486 getestet. Die Beurteilung der gebildeten Verkratzung wurde visuell auf einer Skala von 1 (keine Verkratzung) bis 6 (sehr starke Verkratzung) vorgenommen. Die Beurteilung des Glanzes und des Schleiers (Haze) wurde ebenso visuell durchgeführt und die Ergebnisse einem Wert von 1-6 zugeordnet (1 =sehr gut, 6=sehr mangelhaft).

| Beispiel | Verkratzungsgrad |
|---|---|
| Anwendungsbeispiel 6 (Nullprobe) | 6 |
| Anwendungsbeispiel 12 (erfindungsgemäße Nanopartikel) | 3 |
| Anwendungsbeispiel 13 (erfindungsgemäße Nanopartikel) | 2 |
| Anwendungsbeispiel 14 (erfindungsgemäße Nanopartikel) | 2 |
| Anwendungsbeispiel 15 (erfindungsgemäße Nanopartikel) | 1 |

### 7.2.5 Anwendungsbeispie) 16/17

wässriger Holzlack

| Rohstoff | Anwendungsbeispiel 16 | Anwendungsbeispiel 17 |
|---|---|---|
| NeoPac E 106 | 46,40 | 46,40 |
| BYK-028 | 0,20 | 0,20 |
| Butylglykol | 2,20 | 2,20 |
| Propylenglykol | 2,20 | 2,20 |
| Wasser | 6,00 | 6,00 |
| Coatex BR 125 P (10% in Wasser | 1,80 | 1,80 |
| BYK-341 | 0,20 | 0,20 |
| BYK-346 | 0,20 | 0,20 |
| BYK-028 | 0,80 | 0,80 |
| NeoPac E 106 | 40,00 | 40,00 |
| Dispersion aus Herstellbeispiel 13 | --- | --- |

| | |
|---|---|
| NeoPac E 106 (Aromatische Urethanacrylat Copolymer Dispersion, 33 % in Wasser) | DSM NeoResins, NL |
| BYK-028 (Entschäumer) | BYK-Chemie GmbH, D |
| Coatex BR 125 P (Polyurethanverdicker, 10 % in Wasser) | Coatex SA, F |
| BYK-341 (Oberflächenadditiv) | BYK-Chemie GmbH, D |
| BYK-346 (Oberflächenadditiv) | BYK-Chemie GmbH, D |

Die Komponenten der einzelnen Beschichtungssysteme wurden in der aufgeführten Reihenfolge intensiv miteinander vermischt. Nach zweistündigem Stehen bei Raumtemperatur wurden die Lacke auf Kunststoffsubstrate der Größe 200 x 400 mm in einer Schichtdicke von 150 µm aufgerakelt. Die Aushärtung der Beschichtungen erfolgte durch 16 h lagerung der jeweiligen Platten bei Umgebungsbedingungen und anschließend durch zweistündige Lagerung der Platten bei 60 °C im Umluftofen.
Die Kratzfestigkeit der Platten wurde nach 48 h Konditionierung bei Raumtemperatur durchgeführt.

Die Kratzbeständigkeit wurde mit einem Scheuergerät (Wet Abrasion Scrub Tester, BYK-Gardner) in Anlehnung an die Methode ASTM D 2486 getestet. Die Beurteilung der gebildeten Verkratzung wurde nach 100 bzw. 500 Doppelhüben visuell auf einer Skala von 1 (keine Verkratzung) bis 6 (sehr starke Verkratzung) vorgenommen.

| Beispiel | Verkratzungsgrad nach 100 Doppelhüben | Verkratzungsgrad nach 500 Doppelhüben |
|---|---|---|
| Anwendungsbeispiel 16 (Nullprobe) | 5 | 5 |
| Anwendungsbeispiel 17 (erfindungsgemäße Nanopartikel) | 2 | 3 |

## Patentansprüche

1. Oberflächenmodtfizierte, aus Metall- oder Halbmetalloxiden oder -hydroxiden bestehende Nanopartikel, die auf ihrer Oberfläche mit einem Modifizierungsmittel unter Bildung von kovalenten Bindungen umgesetzt worden sind, **dadurch gekennzeichnet, daß** das Modifizieruhgsmittel ein Polysiloxan der folgenden allgemeinen Summenformel:
(R¹ₓR²₃₋ₓSi R³)_{y}R⁵
ist, in der bedeuten
x = 0-2, insbesondere 0
y = 1-10, bevorzugt 2-5
R¹ = einbindiger organischer Rest mit 1-18 C-Atomen, insbesondere 1-3 C-Atomen
R² = OH-Gruppe oder hydrolysierbare Gruppe bestehend aus:
- linearer oder verzweigter oder cyclischer Alkoxygruppe mit 1-6 C-Atomen, insbesondere mit 1-2 C-Atomen
- einem Halogenatom, insbesondere Chloratom oder
- einem Carbonsäurerest mit 1-4-C-Atomen, bevorzugt 2 C-Atomen
R³ = zweibindiger organischer Rest bestehend aus:
- bevorzugt linearem oder verzweigtem Alkylenrest mit 1-8 C-Atomen,
- Alkylenether
- Alkylenthioether
- Alkylenpolyether, bevorzugt auf Basis von Ethylenoxid, Propylenoxid oder Butylenoxid oder Mischungen der Oxide
- Arylenpolyether
- Alkylenpolyester oder
- einer organischen aliphatischen oder aromatischen oder araliphatischen Gruppe, die neben Ester- bzw. Ethergruppen auch Urethan- bzw. Hamstoffgruppen enthält
R⁵ = mehrbindiger organischer Rest bestehend aus:
- Polydialkylsiloxan mit einem zahlenmittlerem Molekulargewicht von 300-5000 Dalton, wobei die Alkylsubstituenten am Siliziumatom 1-8 C-Atome aufweisen.

2. Nanopartikel nach Anspruch 1, **dadurch gekennzeichnet, daß** das Modifizierungsmittel ein Polysiloxan der allgemeinen Summenformel
R¹ₓ R²₃₋ₓ Si-R³-R⁴
ist, in der R⁴ ein einbindiger organischer Rest bestehend aus einem Polydialkylsiloxan mit einem zahlenmittlerem Molekulargewicht von 300-5000 Dalton ist, wobei die Alkylsubstituenten am Siliziumatom 1-8 C-Atome aufweisen.

3. Nanopartikel nach Anspruch 1 oder 2, **dadurch gekennzeichnet, daß** das Polydialkylsiloxan Polydimethylsiloxan ist.

4. Nanopartikel nach Anspruch 1-3, **dadurch gekennzeichnet, daß** sie aus Oxiden oder Oxidhydroxiden des Aluminiums, Siliziums, Zinks oder Titans bestehen.

5. Nanopartikel nach Anspruch 1-4, **dadurch gekennzeichnet, daß** ihre durch Transmissionselektrortenmikroskopie gemessene Teilchengröße 2-200 nm beträgt.

6. Nanopartikel nach Anspruch 1-5, **dadurch gekennzeichnet, daß** der Anteil des Modifizierungsmittels 0,1 bis 15 Gew.-% bezogen auf das Gesamtgewicht der oberflächenmodifizierten Nanopartikel beträgt.

7. Verfahren zur Herstellung der Nanopartikel nach Anspruch 1-6, **dadurch gekennzeichnet, daß** aus Metall- oder Halbmetalloxiden oder -hydroxiden bestehende Nanopartikel mit einem Modifizierungsmittel unter Bildung von kovalenten Bindungen umgesetzt werden, **dadurch gekennzeichnet, daß** das Modifizierungsmittel ein Polysiloxan der folgenden allgemeinen Summenformel:
(R¹ₓ R²₃₋ₓ Si R³)_{y} R⁵
ist, in der bedeuten
x = 0-2, insbesondere 0
y = 1-10, bevorzugt 2-5
R¹ = einbindiger organischer Rest mit 1-18 C-Atomen, insbesondere 1-3 C-Atomen
R² = OH-Gruppe oder hydrolysierbare Gruppe bestehend aus:
- linearer oder verzweigter oder cyclischer Alkoxygruppe mit 1-6 C-Atomen, insbesondere mit 1-2 C-Atomen
- einem Halogenatom, insbesondere Chloratom oder
- einem Carbönsäurerest mit 1-4 C-Atomen, bevorzugt 2 C-Atomen,
R³ = zweibindiger organischer Rest bestehend aus:
- bevorzugt linearem oder verzweigtem Alkylenrest mit 1-8 C-Atomen
- Alkylenether
- Alkylenthioether
- Alkylenpolyether, bevorzugt auf Basis von Ethylenoxid, Propylenoxid oder Butylenoxid oder Mischungen der Oxide
- Arylenpolyether
- Alkylenpolyester oder
- einer organischen aliphatischen oder aromatischen oder araliphatischen Gruppe, die neben Ester- bzw. Ethergruppen auch Urethan- bzw. Harnstoffgruppen enthält
R⁵ = mehrbindiger organischer Rest bestehend aus:
- Polydialkyisiloxan mit einem zahlenmittlerem Molekulargewicht von 300-5000 Dalton, wobei die Alkylsubstituenten am Siliziumatom 1-8 C-Atome aufweisen.

8. Verfahren nach Anspruch 7, **dadurch gekennzeichnet, daß** die Nanopartikel mit einem Polysiloxan der allgemeinen Summenformel
R¹ₓ R²₃₋ₓ Si-R³-R⁴
umgesetzt werden, in der R⁴ ein einbindiger organischer Rest bestehend aus einem Polydialkylsiloxan mit einem zahlenmittlere Molekulargewicht von 300-5000 Dalton ist, wobei die Alkylsubstituenten am Siliziumatom 1-8 C-Atome aufweisen.

9. Verfahren nach Anspruch 7 oder 8, **dadurch gekennzeichnet, daß** die unmodifizierten Nanopartikel mit einer solchen Menge des Modifizierungsmittels umgesetzt werden, daß.der Anteil des Modifizierundsmittels 0,1 bis 15 Gew.-% bezogen auf das Gesamtgewicht der oberflächenmodifizierten Nanopartikel beträgt.

10. Verwendung der Nanopartikel nach Anspruch 1-6, als Füllstoffe in Beschichtungsstoffen, Kunststoffen, Schaumstoffen und Nagellacken.

11. Dispersionen enthaltend Nanopartikel nach Anspruch 1-6.

12. Nanopartikel nach Anspruch 1 bis 6, **dadurch gekennzeichnet, daß** sie zusätzlich zu der Modifizierung mit einem Polysiloxan mit einem Silan der allgemeinen Summenformel
R⁷₍₄₋ₓ₎Si R⁶ₓ
modifiziert sind, wobei die Indices und Variablen folgende Bedeutung haben:
x=1-3
R⁶ = einbindiger linearer oder verzweigter oder cyclischer organischer Rest mit 1-18 C-Atomen, bevorzugt 1-6 C-Atomen, besonders bevorzugt 1-3 C-Atomen.
R⁷ = Hydroxylgruppe oder hydrolysierbare Gruppe bestehend aus:
- linearer oder verzweigter oder cyclischer Alkoxygruppe mit 1 -6 C-Atomen, insbesondere mit 1-2 C-Atomen oder
- einem Halogenatom, insbesondere Chloratom, oder
- einem Carbonsäurerest mit 1-4 C-Atomen, bevorzugt 2 C-Atomen.

13. Nanopartikel nach Anspruch 1 bis 6 oder 12, **dadurch gekennzeichnet, daß** sie zusätzlich zu der Modifizierung mit einem Polysiloxan mit einem Silan der allgemeinen Summenformel
R⁸₍₄₋ₓ₎Si(R⁹ - R¹⁰ - R¹¹)ₓ
modifiziert sind, wobei die Indices und Variablen folgende Bedeutung haben:
x=1-3
R⁸ = Hydroxylgruppe oder hydrolysierbare Gruppe bestehend aus:
- linearer öder verzweigter oder cyclischer Alkoxygruppe mit 1-6 C-Atomen, insbesondere mit 1-2 C-atomen
- einem Halogenatom, insbesondere Chloratom
- einem Carbonsäurerest mit 1-4 C-Atomen, bevorzugt 2 C-Atomen
R⁹ = Sauerstoff oder zweibindige organische Gruppe, z.B. Alkyienrest
R¹⁰= zweibindiger organischer Rest mit einer Molmasse im Bereich von 130-5000 Dalton bestehend aus einer
- Polyethergruppe bestehend aus vorzugsweise
- Ethylenoxid
- Propylenoxid
- Butylenoxid
- Mischungen der Oxide
- mindestens drei 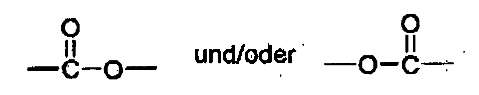 Gruppen enthaltenden allphätischen und/oder cycloaliphatischen und/oder aromatischen Polyestergruppe:
R¹¹= -Alkyl oder
-Acetoxy oder
-O-R¹², wobei R¹² eine Alkylgruppe mit 1-18 C-Atomen ist, oder
-O-CO-NH-R¹³, wobei R¹³ eine Alkylgruppe mit 1-18 C-Atomen ist.

## Claims

1. Surface-modified nanoparticles composed of metal or semimetal oxides or hydroxides and having been reacted on their surface with a modifier, with formation of covalent bonds, **characterized in that** the modifier is a polysiloxane of the following general empirical formula:
(R¹ₓR²₃₋ₓSiR³)_{y}R⁵
in which
x = 0-2, in particular 0
y = 1-10, preferably 2-5
R¹ = monovalent organic radical having 1-18 carbon atoms, in particular 1-3 carbon atoms
R² = OH group or hydrolysable group consisting of:
- linear or branched or cyclic alkoxy group having 1-6 carbon atoms, in particular having 1-2 carbon atoms
- a halogen atom, in particular a chlorine atom, or
- a carboxylic acid radical having 1-4 carbon atoms, preferably 2 carbon atoms
R³ = divalent organic radical consisting of:
- preferably linear or branched alkylene radical having 1-8 carbon atoms
- alkylene ether
- alkylene thioether
- alkylene polyether, preferably based on ethylene oxide, propylene oxide or butylene oxide or mixtures of the oxides
- arylene polyether
- alkylene polyester or
- an organic aliphatic or aromatic or araliphatic group which in addition to ester and/or ether groups also contain urethane and/or urea groups
R⁵ = polyvalent organic radical consisting of:
- polydialkylsiloxane having a number-average molecular weight of 300-5000 daltons, the alkyl substituents on the silicon atom having 1-8 carbon atoms.

2. Nanoparticles according to Claim 1, **characterized in that** the modifier is a polysiloxane of the general empirical formula
R¹ₓR²₃₋ₓSi-R³-R⁴
in which R⁴ is a monovalent organic radical consisting of a polydialkylsiloxane having a number-average molecular weight of 300-5000 daltons, the alkyl substituents on the silicon atom having 1-8 carbon atoms.

3. Nanoparticles according to Claim 1 or 2, **characterized in that** the polydialkylsiloxane is polydimethylsiloxane.

4. Nanoparticles according to Claims 1-3, **characterized in that** they are composed of oxides or oxide hydroxides of aluminium, silicon, zinc or titanium.

5. Nanoparticles according to Claims 1-4, **characterized in that** their particle size as measured by transmission electron microscopy is 2-200 nm.

6. Nanoparticles according to Claims 1-5, **characterized in that** the fraction of the modifier is 0.1% to 15% by weight, based on the total weight of the surface-modified nanoparticles.

7. Process for preparing nanoparticles according to Claims 1-6, **characterized in that** nanoparticles composed of metal or semimetal oxides or hydroxides are reacted with a modifier, with formation of covalent bonds, **characterized in that** the modifier is a polysiloxane of the following general empirical formula:
(R¹ₓR²₃₋ₓSiR³)_{y}R⁵
in which
x = 0-2, in particular 0
y = 1-10, preferably 2-5
R¹ = monovalent organic radical having 1-18 carbon atoms, in particular 1-3 carbon atoms
R² = OH group or hydrolysable group consisting of:
- linear or branched or cyclic alkoxy group having 1-6 carbon atoms, in particular having 1-2 carbon atoms
- a halogen atom, in particular a chlorine atom, or
- a carboxylic acid radical having 1-4 carbon atoms, preferably 2 carbon atoms
R³ = divalent organic radical consisting of:
- preferably linear or branched alkylene radical having 1-8 carbon atoms
- alkylene ether
- alkylene thioether
- alkylene polyether, preferably based on ethylene oxide, propylene oxide or butylene oxide or mixtures of the oxides
- arylene polyether
- alkylene polyester or
- an organic aliphatic or aromatic or araliphatic group which in addition to ester and/or ether groups also contain urethane and/or urea groups
R⁵ = polyvalent organic radical consisting of:
- polydialkylsiloxane having a number-average molecular weight of 300-5000 daltons, the alkyl substituents on the silicon atom having 1-8 carbon atoms.

8. Process according to Claim 7, **characterized in that** the nanoparticles are reacted with a polysiloxane of the general empirical formula
R¹ₓR²₃₋ₓSi-R³-R⁴
in which R⁴ is a monovalent organic radical consisting of a polydialkylsiloxane having a number-average molecular weight of 300-5000 daltons, the alkyl substituents on the silicon atom having 1-8 carbon atoms.

9. Process according to Claim 7 or 8, **characterized in that** the unmodified nanoparticles are reacted with an amount of modifier such that the fraction of the modifier is 0.1% to 15% by weight, based on the total weight of the surface-modified nanoparticles.

10. Use of the nanoparticles according to Claims 1-6 as fillers in coating materials, plastics, foams and nail varnishes.

11. Dispersions comprising nanoparticles according to Claims 1-6.

12. Nanoparticles according to Claims 1 to 6, **characterized in that** in addition to the modification with a polysiloxane they are modified with a silane of the general empirical formula
R⁷₍₄₋ₓ₎SiR⁶ₓ
in which the indices and variables have the following definitions:
x = 1-3
R⁶ = monovalent, linear or branched or cyclic organic radical having 1-18 carbon atoms, preferably 1-6 carbon atoms, more preferably 1-3 carbon atoms
R⁷ = hydroxyl group or hydrolysable group consisting of:
- linear or branched or cyclic alkoxy group having 1-6 carbon atoms, in particular having 1-2 carbon atoms
- a halogen atom, especially chlorine atom, or
- a carboxylic acid radical having 1-4 carbon atoms, preferably 2 carbon atoms.

13. Nanoparticles according to Claims 1 to 6 or 12, **characterized in that** in addition to the modification with a polysiloxane they are modified with a silane of the general empirical formula
R⁸ ₍₄₋ₓ₎Si (R⁹ -R¹⁰ -R¹¹) ₓ
in which the indices and variables have the following definitions:
x = 1-3
R⁸ = hydroxyl group or hydrolysable group composed of:
- linear or branched or cyclic alkoxy group having 1-6 carbon atoms, in particular having 1-2 carbon atoms
- a halogen atom, especially chlorine atom, or - a carboxylic acid radical having 1-4 carbon atoms, preferably 2 carbon atoms
R⁹ = oxygen or divalent organic group, e.g. alkylene radical
R¹⁰ = divalent organic radical having a molar mass in the range 130-5000 daltons, composed of a
- polyether group consisting preferably of
- ethylene oxide
- propylene oxide
- butylene oxide
- mixtures of the oxides
- aliphatic and/or cycloaliphatic and/or aromatic polyester group containing at least three 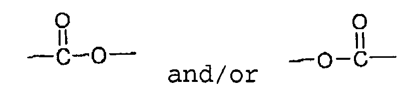 groups,
R¹¹ = -alkyl
-acetoxy
-O-R¹², R¹² being an alkyl group having 1-18 carbon atoms, or
-O-CO-NH-R¹³, R¹³ being an alkyl group having 1-18 carbon atoms.

## Revendications

1. Nanoparticules modifiées en surface composées d'oxydes ou d'hydroxydes de métal ou de semi-métal, lesquelles ont été transformées au niveau de leur surface avec un agent de modification pour former des liaisons covalentes, **caractérisées en ce que** l'agent de modification est un polysiloxane de formule moléculaire générale suivante :
(R¹ₓR²3-xSiR³)_{y} R⁵
où
x = 0 à 2, tout particulièrement 0
y = 1 à 10, de préférence 2 à 5
R¹ = groupement organique à une liaison présentant 1 à 18 atomes de carbone, tout particulièrement 1 à 3 atomes de carbone
R₂ = groupe OH ou groupe hydrolysable composé de :
- groupe alcoxy linéaire ou ramifié ou cyclique présentant 1 à 6 atomes de carbone, tout particulièrement 1 à 2 atomes de carbone
- un atome d'halogène, tout particulièrement un atome de chlore, ou
- un groupement acide carboxylique présentant 1 à 4 atomes de carbone, de préférence 2 atomes de carbone
R³ = groupement organique à deux liaisons composé de :
- de préférence un groupement alkylène linéaire ou ramifié présentant 1 à 8 atomes de carbone
- éther d'alkylène
- thioéther d'alkylène
- polyéther d'alkylène, de préférence à base d'oxyde d'éthylène, d'oxyde de propylène ou d'oxyde de butylène ou de mélanges des oxydes
- polyéther d'arylène
- polyester d'alkylène ou
- un groupe organique aliphatique ou aromatique ou araliphatique qui contient non seulement des groupes ester ou éther, mais aussi des groupes uréthane ou urée
R⁵ = groupement organique à plusieurs liaisons composé de :
- polydialkylsiloxane présentant un poids moléculaire moyen en nombre de 300 à 5000 daltons, les substituants alkyle présentant 1 à 8 atomes de carbone sur l'atome de silicium.

2. Nanoparticules selon la revendication 1, **caractérisées en ce que** l'agent de modification est un polysiloxane de formule moléculaire générale
R¹ₓR²₃₋ₓ Si-R³-R⁴
où R⁴ est un groupement organique à une liaison composé d'un polydialkylsiloxane présentant un poids moléculaire moyen en nombre de 300 à 5000 daltons, les substituants alkyle présentant 1 à 8 atomes de carbone sur l'atome de silicium.

3. Nanoparticules selon la revendication 1 ou 2, **caractérisées en ce que** le polydialkylsiloxane est du polydiméthylsiloxane.

4. Nanoparticules selon les revendications 1 à 3, **caractérisées en ce qu'**elles se composent d'oxydes ou d'oxydes-hydroxydes d'aluminium, de silicium, de zinc ou de titane.

5. Nanoparticules selon les revendications 1 à 4, **caractérisées en ce que** leur taille de particule mesurée par microscopie électronique à transmission est de 2 à 200 nm.

6. Nanoparticules selon les revendications 1 à 5, **caractérisées en ce que** la part d'agent de modification est de 0,1 à 15 % en poids par rapport au poids total des nanoparticules modifiées en surface.

7. Procédé de fabrication des nanoparticules selon les revendications 1 à 6, **caractérisé en ce que** des nanoparticules composées d'oxydes ou d'hydroxydes de métal ou de semi-métal sont transformées à l'aide d'un agent de modification pour former des liaisons covalentes, **caractérisées en ce que** l'agent de modification est un polysiloxane de formule moléculaire générale suivante :
(R¹ₓ R²₃₋ₓSi R³)_{y} R⁵
où
x = 0 à 2, tout particulièrement 0
y = 1 à 10, de préférence 2 à 5
R¹ = groupement organique à une liaison présentant 1 à 18 atomes de carbone, tout particulièrement 1 à 3 atomes de carbone
R² = groupe OH ou groupe hydrolysable composé de :
- groupe alcoxy linéaire ou ramifié ou cyclique présentant 1 à 6 atomes de carbone, tout particulièrement 1 à 2 atomes de carbone
- un atome d'halogène, tout particulièrement un atome de chlore, ou
- un groupement acide carboxylique présentant 1 à 4 atomes de carbone, de préférence 2 atomes de carbone
R³ = groupement organique à deux liaisons, composé de :
- de préférence un groupement alkylène linéaire ou ramifié présentant 1 à 8 atomes de carbone
- éther d'alkylène
- thioéther d'alkylène
- polyéther d'alkylène, de préférence à base d'oxyde d'éthylène, d'oxyde de propylène ou d'oxyde de butylène ou de mélanges des oxydes
- polyéther d'arylène
- polyester d'alkylène ou
- un groupe organique aliphatique ou aromatique ou araliphatique qui contient non seulement des groupes ester ou éther, mais aussi des groupes uréthane ou urée
R⁵ = groupement organique à plusieurs liaisons composé de :
- polydialkylsiloxane présentant un poids moléculaire moyen en nombre de 300 à 5000 daltons, les substituants alkyle présentant 1 à 8 atomes de carbone sur l'atome de silicium.

8. Procédé selon la revendication 7, **caractérisé en ce que** les nanoparticules sont transformées avec un polysiloxane de formule moléculaire générale
R¹ₓR²₃₋ₓ Si-R³-R⁴
où R⁴ est un groupement organique à une liaison composé d'un polydialkylsiloxane présentant un poids moléculaire moyen en nombre de 300 à 5000 daltons, les substituants alkyle présentant 1 à 8 atomes de carbone sur l'atome de silicium.

9. Procédé selon la revendication 7 ou 8, **caractérisé en ce que** les nanoparticules non modifiées sont transformées avec une quantité d'agent de modification telle que la part d'agent de modification est de 0,1 à 15 % en poids par rapport au poids total des nanoparticules modifiées en surface.

10. Utilisation des nanoparticules, selon les revendications 1 à 6, en tant que matériaux de remplissage dans des matériaux de revêtement, matières plastiques, mousses synthétiques et vernis à ongles.

11. Dispersions contenant des nanoparticules selon les revendications 1 à 6.

12. Nanoparticules selon les revendications 1 à 6, **caractérisées en ce qu'**elles sont non seulement modifiées avec un polysiloxane, mais aussi modifiées avec un silane de formule moléculaire générale
R⁷₍₄₋ₓ₎ Si R⁶ₓ
où les indices et variables représentent les éléments suivants :
x=1à3
R⁶ = groupement organique linéaire ou ramifié ou cyclique à une liaison présentant 1 à 18 atomes de carbone, de préférence 1 à 6 atomes de carbone, plus préférablement 1 à 3 atomes de carbone
R⁷ = groupe hydroxyle ou groupe hydrolysable composé de :
- groupe alcoxy linéaire ou ramifié ou cyclique présentant 1 à 6 atomes de carbone, tout particulièrement 1 à 2 atomes de carbone, ou
- un atome d'halogène, tout particulièrement un atome de chlore, ou
- un groupement acide carboxylique présentant 1 à 4 atomes de carbone, de préférence 2 atomes de carbone.

13. Nanoparticules selon les revendications 1 à 6 ou 12, **caractérisées en ce qu'**elles sont non seulement modifiées avec un polysiloxane, mais aussi modifiées avec un silane de formule moléculaire générale
R⁸₍₄₋ₓ₎ Si(R⁹ - R¹⁰ - R¹¹)ₓ
où les indices et variables représentent les éléments suivants :
x=1à3
R⁸ = groupe hydroxyle ou groupe hydrolysable composé de :
- groupe alcoxy linéaire ou ramifié ou cyclique présentant 1 à 6 atomes de carbone, tout particulièrement 1 à 2 atomes de carbone
- un atome d'halogène, tout particulièrement un atome de chlore
- un groupement acide carboxylique présentant 1 à 4 atomes de carbone, de préférence 2 atomes de carbone
R⁹ = oxygène ou groupe organique à deux liaisons, par exemple groupement alkylène
R¹⁰ = groupement organique à deux liaisons présentant une masse moléculaire comprise dans la gamme allant de 130 à 5000 daltons, composé d'un
- groupe polyéther composé, de préférence,
- d'oxyde d'éthylène
- d'oxyde de propylène
- d'oxyde de butylène
- de mélanges des oxydes
- d'au moins trois groupes polyester aliphatiques et/ou cycloaliphatiques et/ou aromatiques contenant des groupes 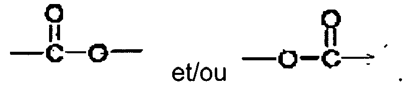
R¹¹ = -alkyle ou
-acétoxy ou
-O-R¹², où R¹² est un groupe alkyle présentant 1 à 18 atomes de carbone, ou
-O-CO-NH-R¹³, où R¹³ est un groupe alkyle présentant 1 à 18 atomes de carbone.
